# EUROPÄISCHE PATENTANMELDUNG

(11) **EP 3 403 479 A1**
(43) Veröffentlichungstag der Anmeldung: **21.11.2018**
(21) Anmeldenummer: 18170722.5
(22) Anmeldetag: 04.05.2018
(51) Int. Cl.: A01B 63/111, A01B 23/02, A01B 33/08, A01B 35/24, A01B 63/114

(54) **VOLLAUTOMATISCHER ZINKENSTRIEGEL**

(30) Priorität: 16.05.2017 DE 102017110637
(71) Anmelder: Treffler Maschinenbau GmbH & Co. KG, 86554 Pöttmes-Echsheim (DE)
(72) Erfinder: Treffler, Paul, 86554 Pöttmes-Echsheim (DE)
(74) Vertreter: Charrier Rapp & Liebau

(57) **Zusammenfassung**

Die Erfindung betrifft einen Zinkenstriegel 1 zur vollautomatischen Bodenbearbeitung, umfassend einen Tragrahmen 2, mehrere an dem Tragrahmen 2 schwenkbar angeordnete Arbeits-Striegelzinken 3 sowie eine Zinkendruckverstelleinheit 4 zur Veränderung der Vorspannung der Arbeits-Striegelzinken 3. Um eine vollautomatische autonome Bodenbearbeitung zu ermöglichen ist eine Messvorrichtung 7 zur Erfassung mindestens eines Wirkparameters der Arbeits-Striegelzinken 3 vorgesehen.

## Beschreibung

Die Erfindung betrifft einen vollautomatischen Zinkenstriegel nach dem Oberbegriff des Anspruchs 1 sowie ein Bearbeitungsverfahren nach dem Oberbegriff von Anspruch 14.

Aus der DE 10 2007 008 616 ist ein Zinkenstriegel bekannt, welcher einen Tragrahmen, mehrere an dem Tragrahmen schwenkbar angeordnete Arbeits-Striegelzinken sowie eine Zinkendruckverstelleinheit umfasst. Mittels der Zinkendruckverstelleinheit kann der Andruck der Arbeits-Striegelzinken einheitlich und automatisch gegenüber dem zu bearbeitenden Boden verstellt werden. Dies ermöglicht es, dass auch während der Bearbeitung, beispielsweise der Boden- und Saatbearbeitung von Kulturpflanzen im landwirtschaftlichen Ackerbau, der Andruck/Zinkendruck an wechselnde Bodenverhältnisse angepasst werden kann, wodurch eine gleichbleibende Eindringtiefe der Arbeits-Striegelzinken und damit eine konstant hohe Bearbeitungsqualität erreicht wird. Dabei beurteilt der Landwirt von dem Zugfahrzeug aus die Eindringtiefe der Arbeits-Striegelzinken und variiert bei Bedarf den Andruck der Arbeits-Striegelzinken, wodurch sich auch die Eindringtiefe ändert.

Aufgabe der Erfindung ist es, einen Zinkenstriegel zu schaffen, welcher eine vollautomatische autonome Bodenbearbeitung ermöglicht, so dass eine autonome Arbeitsweise ohne menschliche Überwachung und Eingriff realisierbar ist.

Diese Aufgabe wird durch einen Zinkenstriegel mit den Merkmalen des Anspruchs 1 sowie ein Bearbeitungsverfahren mit den Merkmalen des Anspruchs 14 gelöst. Vorteilhafte Ausgestaltungen der Erfindung sind in den Unteransprüchen angegeben.

Der erfindungsgemäße Zinkenstriegel zeichnet sich dadurch aus, dass er eine Messvorrichtung zur Erfassung mindestens eines Wirkparameters der Arbeits-Striegelzinken aufweist. Mittels des ermittelten Wirkparameters kann damit in Echtzeit der Effekt der Arbeits-Striegelzinken auf den zu bearbeitenden Boden erfasst und die Vorspannung der Arbeits-Striegelzinken durch die Zinkendruckverstelleinheit angepasst werden. Hierdurch wird eine sehr präzise und autonome Bodenbearbeitung ermöglicht.

In einer bevorzugten Ausführungsform weist die Messvorrichtung mindestens einen optischen Sensor zur Erfassung des Verschüttungsgrads in Fahrtrichtung vor und/oder hinter den Arbeits-Striegelzinken auf. Insbesondere durch den Vergleich zwischen der Verschüttung vor und hinter den Arbeits-Striegelzinken kann besonders einfach die durch die Arbeits-Striegelzinken bewirkte Verschüttung, also die Überdeckung von unerwünschtem Unkraut durch Umwälzung von Bodenmaterial, bestimmt werden. Dabei kann lediglich ein optischer Sensor vorgesehen sein, welcher über eine entsprechend ausgebildete Optik den Bereich vor und hinter den Arbeits-Striegelzinken erfasst. Es ist jedoch auch möglich, mehrere optische Sensoren vorzusehen, was insbesondere bei sehr breiten Zinkenstriegeln eine separate Erfassung und Auswertung über die Breite ermöglicht.

Da beim Striegel auf die Verschüttung der Unkräuter ein sehr großes Augenmerk geworfen wird, wird bevorzugt mit mehreren optischen Sensoren wie Kameras in Front und Heck der Verschüttungsgrad gemessen, also eine Aufnahme vor der Arbeit und nach der Arbeit, die über eine intelligente Software verarbeitet wird. Der Verschüttungsgrad hat eine Standardeinstellung, kann aber auch vom Landwirt nach seinen Wünschen geändert werden. Hierzu ist es wichtig, dass die Kulturpflanzen nicht zu sehr verschüttet werden, da dadurch das Wachstum gestört wird. Bei einer zu hohen Verschüttung der Kulturpflanzen müssen durch ein nochmaliges Striegeln mit einer leichteren Striegel-Einstellung die Kulturpflanzen wieder frei gestriegelt werden. Dementsprechend wird auch die Fahrgeschwindigkeit, oder die Bearbeitungstiefe automatisch geregelt.

Besonders bevorzugt ist eine Steuereinheit vorgesehen, welche ausgebildet ist, in Abhängigkeit des ermittelten Verschüttungsgrads die Zinkendruckverstelleinheit anzusteuern, so dass bei einem zu geringen Verschüttungsgrad die Vorspannung der Arbeits-Striegelzinken durch die Zinkendruckverstelleinheit erhöht und bei zu hohem Verschüttungsgrad entsprechend reduziert wird.

Um die Eindringtiefe der Arbeits-Striegelzinken zu erfassen, kann eine Zinkenstriegel-Eindringtiefenmessvorrichtung vorgesehen sein. Diese kann bevorzugt einen Träger, einen an dem Träger schwenkbar montierten Referenz-Striegelzinken und eine Abstandsmessvorrichtung benachbart dem Referenz-Striegelzinken zur Messung des Abstands zur Oberfläche eines zu bearbeitenden Bodens umfassen, wobei ein Sensor zur Erfassung der Auslenkung des Referenz-Striegelzinkens vorgesehen ist, so dass aus dem Abstand und der Auslenkung die Eindringtiefe des Referenz-Striegelzinkens in den zu bearbeitenden Boden bestimmbar ist. Da die geometrischen Größen des Referenz-Striegelzinkens und die Positionierung gegenüber der Abstandsmessvorrichtung bekannt sind, kann hierdurch auf einfache Weise die Eindringtiefe des Referenz-Striegelzinkens in den zu bearbeitenden Boden rechnerisch ermittelt werden.

Dabei kann die Abstandsmessvorrichtung zur Messwertaufnahme mittels akustischer (beispielsweise Radar, Ultraschall), optischer (beispielsweise Laser), elektronischer (beispielsweise geoelektrisch oder mittels GPS) oder mechanischer Signalerfassung ausgebildet sein. Bevorzugt umfasst die Abstandsmessvorrichtung dabei ein Laufrad, welches vertikal beweglich am Träger befestigt und zum Abrollen auf dem zu bearbeitenden Boden ausgebildet ist. Durch die vertikale Beweglichkeit des Laufrads, welche über eine vertikale Längsführung oder auch eine Schwenkachse realisiert sein kann, kann das Laufrad dem Verlauf des zu bearbeitenden Bodens exakt folgen, so dass über die Auslenkung des Laufrads der Verlauf des Bodens und damit die Höhe des Bodens gegenüber dem Träger bestimmbar ist.

Bevorzugt ist das Laufrad schwenkbar, insbesondere um eine horizontale Schwenkachse, an dem Träger befestigt. Der Sensor kann dabei besonders bevorzugt ausgebildet sein, die Winkeldifferenz zwischen der Auslenkung des Referenz-Striegelzinkens und der Auslenkung des Laufrads zu bestimmen. Eine gesonderte Bestimmung der Winkellage des Referenz-Striegelzinkens zu dem Träger und der Auslenkung des Laufrads relativ zu dem Träger ist hierbei nicht notwendig. Hierdurch kann auf direktem Weg die Eindringtiefe bestimmt werden, was besonders einfach konstruktiv umgesetzt werden kann.

Eine besonders einfache konstruktive Ausführung wird ermöglicht, wenn der Referenz-Striegelzinken und das Laufrad um eine gemeinsame Drehachse schwenkbar an dem Träger befestigt sind. In diesem Fall kann sehr einfach die Winkeldifferenz zwischen dem Referenz-Striegelzinken und dem Laufrad ermittelt werden, indem beispielsweise der eine Teil eines Drehwinkelsensors an einem Lagerzapfen des Referenz-Striegelzinkens und der andere Teil des Drehwinkelsensors an einem benachbart und koaxial angeordneten Lagerzapfen des Laufrads befestigt ist. Hierbei liefert der Drehwinkelsensor direkt die für die Eindringtiefe maßgebliche Winkeldifferenz. Das Signal des Drehwinkelsensors kann dabei von einer Steuereinheit ausgewertet und zur automatischen Einstellung oder auch nur zur Anzeige der Eindringtiefe verwendet werden.

Der Referenz-Striegelzinken der Zinkenstriegel-Eindringtiefenmessvorrichtung kann dabei bevorzugt identisch zu den Arbeits-Striegelzinken ausgebildet sein, so dass die Auslenkung des Referenz-Striegelzinken der Auslenkung der Arbeits-Striegelzinken entspricht und die ermittelte Eindringtiefe auch bei den Arbeits-Striegelzinken vorliegt. Gerade bei besonders breiten Zinkenstriegeln ist es von Vorteil, wenn über die Breite mehrere derartige Eindringtiefenmessvorrichtungen vorgesehen sind, um Änderungen der Bodenbeschaffenheit und damit der Eindringtiefe über die Breite des Zinkenstriegels erfassen zu können.

Bevorzugt kann die Zinkendruckverstelleinheit zur Veränderung der Vorspannung der Arbeits-Striegelzinken wie in DE 10 2007 008 616 A1 beschrieben ausgebildet sein, deren Inhalt hiermit in diese Anmeldung aufgenommen wird. Mittels dieser Zinkendruckverstelleinheit kann die Vorspannung und damit der Andruck der Arbeits-Striegelzinken einheitlich verstellt werden. Die Zinkendruckverstelleinheit kann dabei einheitlich den Zinkendruck über die gesamte Breite steuern oder, wie oben angesprochen, vorteilhaft bei besonders breiten Zinkenstriegeln mit mehreren Eindringtiefenmessvorrichtungen auch separat bestimmte, in seitlich zueinander versetzten Bereichen der Arbeits-Striegelzinken den Zinkendruck unabhängig steuern, je nach dem Wert der Eindringtiefe, die für diesen Bereich von der entsprechenden Zinkenstriegel-Eindringtiefenmessvorrichtung bestimmt wurde.

Besonders bevorzugt ist dabei der Referenz-Striegelzinken der Zinkenstriegel-Eindringtiefenmessvorrichtung mit der Zinkendruckverstelleinheit zur gemeinsamen Verstellung des Zinkendrucks der Arbeits-Striegelzinken und des Referenz-Striegelzinkens verbunden ist. Hierdurch wird gewährleistet, dass der Referenz-Striegelzinken den gleichen Andruck wie die Arbeits-Striegelzinken aufweist, so dass die Eindringtiefe des Referenz-Striegelzinkens auch bei verändertem Andruck der Eindringtiefe der Arbeits-Striegelzinken entspricht.

Eine besonders einfache Ansteuerung der Striegelzinken kann dadurch erreicht werden, dass die Arbeits-Striegelzinken und der Referenz-Striegelzinken über Spannseile mit der Zinkendruckverstelleinheit verbunden sind. Derartige Spannseile beispielsweise aus Stahl ermöglichen eine einfache Kraftumlenkung und sind zudem besonders leicht.

Um den Andruck besonders genau einstellen zu können und zudem die Elastizität der Striegelzinken zu erhöhen, kann zwischen den Arbeits-Striegelzinken bzw. dem Referenz-Striegelzinken und der Zinkendruckverstelleinheit jeweils ein Federelement angeordnet sein.

In einer vorteilhaften Ausführungsform kann die Zinkendruckverstelleinheit ein Rohr umfassen, welches drehbar an dem Tragrahmen befestigt ist. An der Außenseite des Rohrs können dabei die Spannseile befestigt sein, so dass bei einer Drehung des Rohrs die Spannseile aufgewickelt und damit gleichmäßig gespannt werden.

Zudem kann eine weitere Steuereinheit bzw. Regeleinheit vorgesehen sein, welche ausgebildet ist, den Ist-Wert der Eindringtiefe mit einem einstellbaren Soll-Wert zu vergleichen und bei Abweichungen die Zinkendruckverstelleinheit derart anzusteuern, dass der Ist-Wert der Eindringtiefe dem Soll-Wert entspricht.

Um ein autonomes Fahren des Zinkenstriegels zu ermöglichen, kann an dem Tragrahmen mindestens ein motorisch angetriebenes Rad angeordnet sein. Bevorzugt sind an dem Rahmen jedoch mehrere, insbesondere vier Räder angeordnet, von denen mindestens zwei Räder an der Front des Zinkenstriegels motorisch angetrieben sind. Bei größeren Arbeitsbreiten wird ein synchroner Antrieb wie in der Front auch am Heck in die Räder integriert. Der Antrieb kann elektrisch oder auch hydraulisch erfolgen. Zudem kann besonders bevorzugt auch mindestens eines dieser Räder, bevorzugt jedoch zwei der Räder motorisch lenkbar sein. Werden alle Räder motorisch lenkbar ausgebildet, so wird eine besonders gute Manövrierbarkeit erreicht.

In einer vorteilhaften Ausführungsform kann mindestens eines der Räder, bevorzugt alle der Räder, motorisch höhenverstellbar an dem Tragrahmen angeordnet sein. Der Antrieb kann elektrisch oder auch hydraulisch erfolgen. Hierdurch kann die Eindringtiefe der Arbeits-Striegelzinken alternativ oder zusätzlich zur Zinkendruckverstelleinheit angepasst werden und es ist zudem möglich, durch ein Anheben des Tragrahmens die Arbeits-Striegelzinken außer Eingriff mit dem zu bearbeitenden Boden zu bringen, so dass auch autonome Wendemanöver oder Leerfahren möglich sind. Die Transporthöhe und Arbeitstiefe des Tragrahmens 2 wird über ein Längenmeßsystem am Zylinder bestimmt.

Für einen emissionsfreien und effizienten Betrieb kann der Zinkenstriegel eine photovoltaische und/oder batterieelektrische Energieversorgungseinheit aufweisen. Hierfür kann beispielsweise eine Batterie vorgesehen sein, welche über Solarzellen geladen wird. Zusätzlich können am Rand des zu bearbeitenden landwirtschaftlichen Feldes auch Ladestationen für den Zinkenstriegel vorgesehen sein, welche der Zinkenstriegel bei Bedarf vollautomatisch anfährt. Es ist jedoch auch möglich, die Energieversorgung mittels konventioneller Diesel-, Benzin- oder Gasmotoren zu gewährleisten.

In einer weiteren vorteilhaften Ausführungsform kann der Zinkenstriegel ein Positionsbestimmungssystem wie beispielsweise GPS sowie eine Regeleinheit zur Ansteuerung des mindestens einen Rads gemäß vorgegebenen Positionsdaten umfassen. Dies ermöglicht ein autonomes Fahren und Bearbeiten von ganzen landwirtschaftlichen Feldern. Hierzu sind lediglich die Positionsdaten des Feldes, die Fahrwege sowie weitere mögliche Positionsdaten, wie Ladestationen, vorzugeben. Die Flächenerkennung, Rastereinteilung und Fahrgeschwindigkeit wird dabei über GPS abgenommen.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine Seitenansicht auf einen Zinkenstriegel;
- **Fig. 2**: eine erste perspektivische Ansicht auf den Zinkenstriegel von Figur 1 und
- **Fig. 3**: eine zweite perspektivische Ansicht auf den Zinkenstriegel von Figur 1.

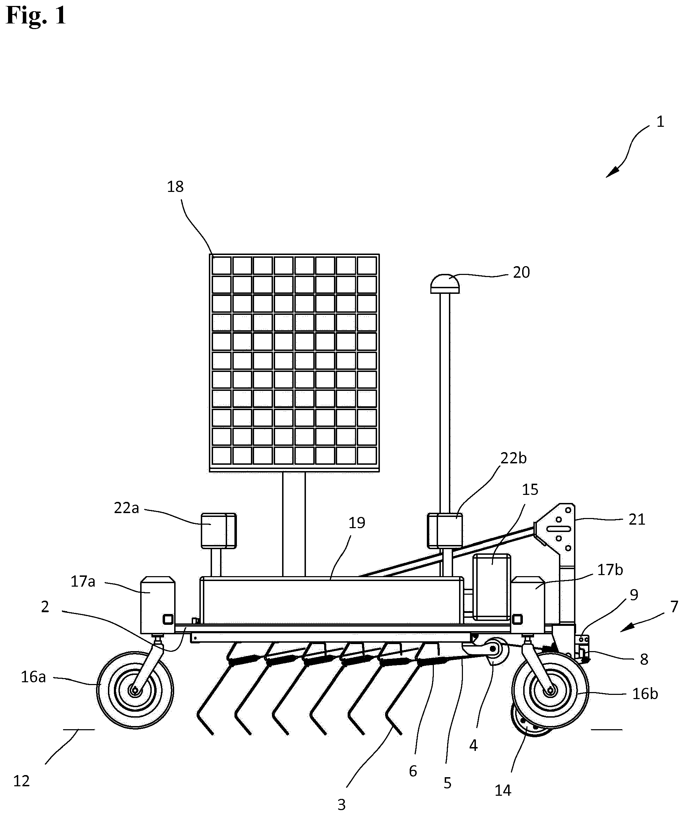

In Figur 1 ist eine Seitenansicht auf einen Zinkenstriegel 1 gezeigt. Der Zinkenstriegel 1 weist einen Tragrahmen 2, mehrere an dem Tragrahmen 2 schwenkbar angeordnete Arbeits-Striegelzinken 3 sowie eine Zinkendruckverstelleinheit 4 zur Veränderung der Vorspannung der Arbeits-Striegelzinken 3 auf. Die Zinkendruckverstelleinheit 4 umfasst ein Rohr, welches drehbar an dem Tragrahmen 2 befestigt ist. An der Außenseite des Rohrs sind Spannseile 5 befestigt, welche über jeweils eine Feder 6 mit den Arbeits-Striegelzinken 3 verbunden sind, so dass bei einer Drehung des Rohrs die Spannseile 5 aufgewickelt und damit gleichmäßig gespannt werden.

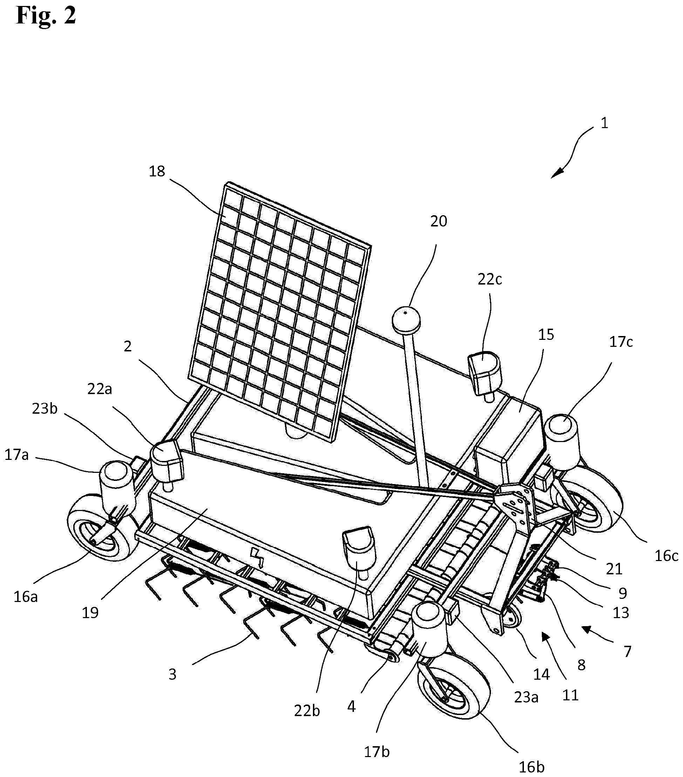

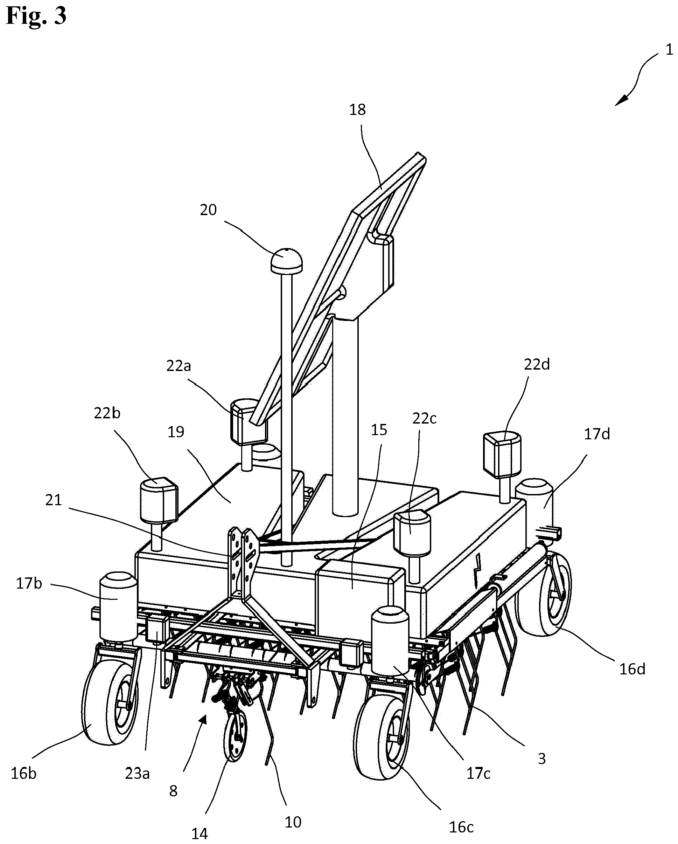

An dem Tragrahmen 2 ist zudem eine Messvorrichtung 7 ausgebildet, welche eine Zinkenstriegel-Eindringtiefenmessvorrichtung 8 umfasst. Die Zinkenstriegel-Eindringtiefenmessvorrichtung 8 weist einen Träger 9, einen an dem Träger 9 schwenkbar montierten Referenz-Striegelzinken 10 und eine Abstandsmessvorrichtung 11 benachbart dem Referenz-Striegelzinken 10 zur Messung des Abstands zur Oberfläche eines zu bearbeitenden Bodens 12 auf, wie in Bezug auf Figuren 2 und 3 näher erläutert wird. Dabei ist ein Sensor 13 zur Erfassung der Auslenkung des Referenz-Striegelzinkens 10 vorgesehen, so dass aus dem Abstand und der Auslenkung die Eindringtiefe des Referenz-Striegelzinkens 10 in den zu bearbeitenden Boden 12 bestimmbar ist.

Die Abstandsmessvorrichtung 11 umfasst ein Laufrad 14, welches vertikal schwenkbar an dem Träger befestigt ist. Der Sensor 13 ist ausgebildet, die Winkeldifferenz zwischen der Auslenkung des Referenz-Striegelzinkens 10 und der Auslenkung des Laufrads 14 zu bestimmen. Da die übrigen geometrischen Größen bekannt sind, kann hierdurch die Eindringtiefe sehr exakt bestimmt werden. Hierzu ist eine Regeleinheit 15 vorgesehen, welche ausgebebildet ist, den Ist-Wert der Eindringtiefe mit einem einstellbaren Soll-Wert der Eindringtiefe zu vergleichen und bei Abweichungen die Zinkendruckverstelleinheit 4 derart anzusteuern, dass der Ist-Wert der Eindringtiefe dem Soll-Wert entspricht.

Des Weiteren sind an dem Tragrahmen 2 auch mehrere Räder angeordnet, von denen in Figur 1 die Räder 16a, 16b gezeigt sind und zumindest das vordere Rad 16b motorisch angetrieben ist. Um eine automatische Lenkung zu ermöglichen, ist zumindest das Rad 16b, bevorzugt jedoch beide Räder 16a, 16b, zudem über jeweils einen Motor 17a, 17b lenkbar. In den Motoren 17a, 17b ist zudem eine Höhenverstelleinrichtung integriert, so dass die Räder 16a, 16b gegenüber dem Tragrahmen 2 höhenverstellbar ausgebildet sind.

Um die Energieversorgung der Messvorrichtung 7 und der Räder 16a, 16b mit den Motoren 17a, 17b zu gewährleisten, weist der Zinkenstriegel 1 eine photovoltaische Energieversorgungseinheit 18 und eine batterieelektrische Energieversorgungseinheit 19 auf, wobei die photovoltaische Energieversorgungseinheit 18 ausgebildet ist, die batterieelektrische Energieversorgungseinheit zu laden. Die photovoltaische Energieversorgungseinheit 18 ist dreh- und schwenkbar an dem Tragrahmen 2 montiert, so dass die Photovoltaik-Module immer optimal gegenüber der Sonne ausgerichtet werden können.

Für ein autonomes Bahnfahren umfasst der Zinkenstriegel 1 zudem ein Positionsbestimmungssystem 20, wie beispielsweise GPS, und die Regeleinheit 15 zur Ansteuerung der Räder 16a, 16b gemäß vorgegebenen Positionsdaten des zu bearbeitenden landwirtschaftlichen Feldes. Zudem ist an dem Tragrahmen 2 auch eine Befestigungsvorrichtung 21 in Form einer Dreipunktaufnahme angeordnet, welche den Transport des Zinkenstriegels 1 mittels einen Zugfahrzeug ermöglicht.

Zur Sicherheit für sich näherende Personen, Geräte oder Fahrzeuge sind zudem Rundumüberwachungssensoren 22a, 22b vorgesehen, welche eine drohende Kollision erkennen und an die Regeleinheit 15 melden.

In Figur 2 ist eine erste perspektivische Ansicht auf den Zinkenstriegel 1 von Figur 1 gezeigt. Wie aus der perspektivischen Darstellung hervorgeht, sind die Räder 16a, 16b, 16c, 16d mit den Motoren 17a, 17b, 17c, 17d an jeweils einer Ecke des rechteckigen Tragrahmens 2 angeordnet, wobei diese im Übrigen identisch ausgebildet sind. Auch die Raumüberwachungssensoren 22a, 22b, 22c, 22d sind entsprechend in einem Rechteckmuster angeordnet.

Wie aus Figur 2 weiter zu entnehmen ist, weist die Messvorrichtung 7 zudem mehrere optische Sensoren 23a, 23b auf, von denen ein erster optischer Sensor 23a in Fahrtrichtung vor den Arbeits-Striegelzinken 3 und ein zweiter optischer Sensor 23b in Fahrtrichtung hinter den Arbeits-Striegelzinken 3 angeordnet ist. Parallel hierzu sind weitere identische Paare von optischen Sensoren am Tragrahmen 2 angeordnet. In Abhängigkeit des durch die optischen Sensoren 23a, 23b ermittelten Verschüttungsgrads kann eine Steuereinheit, welche bevorzugt in die Regeleinheit 15 integriert ist, die Zinkendruckverstelleinheit 4 ansteuern, so dass immer ein optimaler Verschüttungsgrad erreicht wird.

In der weiteren perspektivischen Ansicht auf den Zinkenstriegel 1 in Figur 3 ist die Zinkenstriegel-Eindringtiefenmessvorrichtung 8 mit dem Referenz-Striegelzinken 10 gezeigt. Zur Funktionsweise der Zinkenstriegel-Eindringtiefenmessvorrichtung 8 wird auf die DE 10 2016 124 517 verwiesen, deren Inhalt hiermit in diese Anmeldung aufgenommen wird.

Mit dem beschriebenen Zinkenstriegel kann nun ein Bodenbearbeitungsverfahren umgesetzt werden, bei welchem der Verschüttungsgrad vor und nach den Arbeits-Striegelzinken optisch erfasst wird, der Ist-Verschüttungsgrad ausgewertet wird, mit einem einstellbaren Soll-Verschüttungsgrad verglichen wird und anschließend die Zinkendruckverstelleinheit in Abhängigkeit von der Abweichung zwischen Soll-Verschüttungsgrad und Ist-Verschüttungsgrad angesteuert wird, so dass immer ein optimaler Verschüttungsgrad erreicht wird. Ergänzend hierzu kann die Eindringtiefe der Arbeits-Striegelzinken mittels der Zinkenstriegel-Eindringtiefenmessvorrichtung erfasst werden, der Ist-Wert der Eindringtiefe ausgewertet und mit einem einstellbaren Soll-Wert der Eindringtiefe verglichen werden und die Zinkendruckverstelleinheit in Abhängigkeit von der Abweichung zwischen Soll-Wert der Eindringtiefe und Ist-Wert der Eindringtiefe angesteuert werden.

Der Zinkenstriegel kann damit entweder als autonomes Gerät, welches eigenständig fährt und entsprechend die Einstellungen und die Fahrgeschwindigkeit automatisch regelt, oder als Anhängegerät an einem Zugfahrzeug mit vollautomatischer Einstellung der Arbeits-Striegelzinken verwendet werden. Zudem können mehrere derartige autonome Zinkenstriegel auf derselben Ackerfläche arbeiten, wobei das Zusammenspiel über eine Software geregelt wird. Der Vorarbeiter kann über die Software alle Arbeiten auf dem Feld überwachen. Bricht der Kontakt zum GPS ab, bleiben die Zinkenstriegel automatisch stehen. Die Steuerung der Zinkenstriegel erfolgt vollautomatisch, der Landwirt fährt mit oder ohne GPS. Der Zinkenstriegel ist auch für die Verwendung mit autonomen Schleppern, welche vollautomatisch die Flächen bearbeiten können, geeignet.

### Bezugszeichenliste

- 1: Zinkenstriegel
- 2: Tragrahmen
- 3: Arbeits-Striegelzinken
- 4: Zinkendruckverstelleinheit
- 5: Spannseil
- 6: Feder
- 7: Messvorrichtung
- 8: Zinkenstriegel-Eindringtiefenmessvorrichtung
- 9: Träger
- 10: Referenz-Striegelzinken
- 11: Abstandsmessvorrichtung
- 12: Boden
- 13: Sensor
- 14: Laufrad
- 15: Regeleinheit
- 16a, 16b, 16c, 16d: Rad
- 17a, 17b, 17c, 17d: Motor
- 18: Photovoltaische Energieversorgungseinheit
- 19: Batterieelektrische Energieversorgungseinheit
- 20: Positionsbestimmungssystem
- 21: Befestigungsvorrichtung
- 22a, 22b, 22c, 22d: Raumüberwachungssensor
- 23a, 23b: Optischer Sensor

## Patentansprüche

1. Zinkenstriegel (1) zur vollautomatischen Bodenbearbeitung, umfassend einen Tragrahmen (2), mehrere an dem Tragrahmen (2) schwenkbar angeordnete Arbeits-Striegelzinken (3) sowie eine Zinkendruckverstelleinheit (4) zur Veränderung der Vorspannung der Arbeits-Striegelzinken (3), **gekennzeichnet durch** eine Messvorrichtung (7) zur Erfassung mindestens eines Wirkparameters der Arbeits-Striegelzinken (3).

2. Zinkenstriegel (1) nach Anspruch 1, **dadurch gekennzeichnet, dass** die Messvorrichtung (7) mindestens einen optischen Sensor (23a; 23b) zur Erfassung des Verschüttungsgrads in Fahrtrichtung vor und/oder hinter den Arbeits-Striegelzinken (3) aufweist.

3. Zinkenstriegel (1) nach Anspruch 1 oder 2, **dadurch gekennzeichnet, dass** eine Steuereinheit (15) vorgesehen ist, welche ausgebildet ist, in Abhängigkeit des ermittelten Verschüttungsgrads die Zinkendruckverstelleinheit (4) anzusteuern.

4. Zinkenstriegel (1) nach einem der Ansprüche 1 bis 3, **dadurch gekennzeichnet, dass** die Messvorrichtung (7) eine Zinkenstriegel-Eindringtiefenmessvorrichtung (8) umfasst.

5. Zinkenstriegel (1) nach Anspruch 4, **dadurch gekennzeichnet, dass** die Zinkenstriegel-Eindringtiefenmessvorrichtung (8) einen Träger (9), einen an dem Träger (9) schwenkbar montierten Referenz-Striegelzinken (10) und eine Abstandsmessvorrichtung (11) benachbart dem Referenz-Striegelzinken (10) zur Messung des Abstands zur Oberfläche eines zu bearbeitenden Bodens (12) aufweist, wobei ein Sensor (13) zur Erfassung der Auslenkung des Referenz-Striegelzinkens (10) vorgesehen ist, so dass aus dem Abstand und der Auslenkung die Eindringtiefe des Referenz-Striegelzinkens (10) in den zu bearbeitenden Boden (12) bestimmbar ist.

6. Zinkenstriegel (1) nach Anspruch 5, **dadurch gekennzeichnet, dass** die Abstandsmessvorrichtung (11) ein Laufrad (14) umfasst, welches vertikal beweglich, insbesondere schwenkbar, an dem Träger (9) befestigt ist.

7. Zinkenstriegel (1) nach Anspruch 6, **dadurch gekennzeichnet, dass** der Sensor (13) ausgebildet ist, die Winkeldifferenz zwischen der Auslenkung des Referenz-Striegelzinkens (10) und der Auslenkung des Laufrands (14) zu bestimmen.

8. Zinkenstriegel (1) nach einem der vorhergehenden Ansprüche, **dadurch gekennzeichnet, dass** eine Regeleinheit (15) vorgesehen ist, welche ausgebildet ist, den Ist-Wert der Eindringtiefe mit einem einstellbaren Soll-Wert zu vergleichen und bei Abweichungen die Zinkendruckverstelleinheit (4) derart anzusteuern, dass der Ist-Wert der Eindringtiefe dem Soll-Wert entspricht.

9. Zinkenstriegel (1) nach einem der vorhergehenden Ansprüche, **dadurch gekennzeichnet, dass** an dem Tragrahmen (2) mindestens ein motorisch angetriebenes Rad (16a; 16b; 16c; 16d) angeordnet ist.

10. Zinkenstriegel (1) nach Anspruch 9, **dadurch gekennzeichnet, dass** das mindestens eine Rad (16a; 16b; 16c; 16d) motorisch lenkbar ist.

11. Zinkenstriegel (1) nach Anspruch 9 oder 10, **dadurch gekennzeichnet, dass** das mindestens eine Rad (16a; 16b; 16c; 16d) motorisch höhenverstellbar an dem Tragrahmen (2) angeordnet ist.

12. Zinkenstriegel (1) nach einem der vorhergehenden Ansprüche, **gekennzeichnet durch** eine photovoltaische und/oder batterieelektrische Energieversorgungseinheit (18; 19).

13. Zinkenstriegel (1) nach einem der Ansprüche 9 bis 12, **gekennzeichnet durch** ein Positionsbestimmungssystem (20) und eine Regeleinheit (15) zur Ansteuerung des mindestens einen Rads (16a; 16b; 16c; 16d) gemäß vorgegebenen Positionsdaten.

14. Verfahren zur vollautomatischen Bodenbearbeitung, umfassend einen Zinkenstriegel (1) mit einem Tragrahmen (2), mehrere an dem Tragrahmen (2) schwenkbar angeordneten Arbeits-Striegelzinken (3), eine Zinkendruckverstelleinheit (4) zur Veränderung der Vorspannung der Arbeits-Striegelzinken (3) sowie eine Messvorrichtung (7) zur Erfassung mindestens eines Wirkparameters der Arbeits-Striegelzinken (3), **gekennzeichnet durch** die Schritte:
- optische Erfassung des Verschüttungsgrads vor und nach den Arbeits-Striegelzinken (3);
- Auswertung des Ist-Verschüttungsgrads und Vergleich mit einem einstellbaren Soll-Verschüttungsgrad;
- Ansteuern der Zinkendruckverstelleinheit (4) in Abhängigkeit von der Abweichung zwischen Soll-Verschüttungsgrad und Ist-Verschüttungsgrad.

15. Verfahren nach Anspruch 14, **gekennzeichnet durch** die weiteren Schritte:
- Erfassung der Eindringtiefe der Arbeits-Striegelzinken (3) mittels einer Zinkenstriegel-Eindringtiefenmessvorrichtung (8)
- Auswertung des Ist-Werts der Eindringtiefe und Vergleich mit einem einstellbaren Soll-Wert der Eindringtiefe;
- Ansteuern der Zinkendruckverstelleinheit (4) in Abhängigkeit von der Abweichung zwischen Soll-Wert der Eindringtiefe und Ist-Wert der Eindringtiefe.
